# EUROPÄISCHE PATENTSCHRIFT

(11) **EP 2 057 044 B1**
(45) Veröffentlichungstag und Bekanntmachung des Hinweises auf die Patenterteilung: **07.04.2010**
(21) Anmeldenummer: 08715883.8
(22) Anmeldetag: 20.02.2008
(51) Int. Cl.: B60R 21/215

(54) **AIRBAGDECKELSCHARNIER MIT KRAFTAUFNEHMENDEM SYSTEM**
AIRBAG COVER HINGE WITH PRESSURE-SENSING SYSTEM
CHARNIÈRE DE COUVERCLE D'AIRBAG PRÉSENTANT UN SYSTÈME TRANSDUCTEUR DE FORCE

(30) Priorität: 21.02.2007 DE 102007009058; 28.11.2007 DE 202007016718 U
(43) Veröffentlichungstag der Anmeldung: 13.05.2009
(73) Patentinhaber: K.L. Kaschier- und Laminier GmbH, 48599 Gronau-Epe (DE)
(72) Erfinder: RORING, Albert, 48599 Gronau-Epe (DE); GRIMMELT, Michael, 48599 Gronau-Epe (DE)
(74) Vertreter: Cohausz, Helge B.
(86) Internationale Anmeldenummer: PCT/EP2008/001312
(87) Internationale Veröffentlichungsnummer: WO 2008/101681

(56) Entgegenhaltungen:
- EP-A- 1 752 343
- WO-A-2007/110048
- US-A- 5 393 089
- ANONYMOUS: "Tethered deployment door" RESEARCH DISCLOSURE, MASON PUBLICATIONS, HAMPSHIRE, GB, Bd. 386, Nr. 16, 1. Juni 1996 (1996-06-01), XP007121105 ISSN: 0374-4353

## Beschreibung

Die Neuerung betrifft ein Airbagdeckelscharnier mit einem textilen Scharnier, das sowohl mit einem den Airbagdeckel als auch mit einem den Airbagdeckel umgebenden Trägerteil verbindbar ist.

Beim Airbagschuss öffnet sich der Airbagdeckel, um das Heraustreten des Airbags zu ermöglichen und das Airbagdeckelscharnier ermöglicht eine Führung des Airbagdeckels beim Öffnen.

Ein Airbagscharnier aus Gewebe oder Gewirke ist aus der WO 03/033313 "Innenverkleidungsteil für Kraftfahrzeuge" bekannt. Je nach Größe des eingesetzten Airbagdeckels treten beim Airbagschuss unterschiedliche Kräfte auf das Scharnier des Airbagdeckels auf. Je größer der Airbagdeckel bzw. je schwerer ein Airbagdeckel ist, desto höher sind die auf das Scharnier auftretenden Kräfte und es ist zum einen sicherzustellen, dass sich der Airbagdeckel beim Airbagschuss leicht öffnet und zum anderen ist sicherzustellen, dass dennoch ein Lösen des Airbagdeckels von dem ihn umgebenden Trägerteil auf alle Fälle ausgeschlossen wird, um die Personen im Bereich des Airbags nicht zu gefährden.

Bei dem aus dem Stand der Technik bekannten Scharnier eines Airbagdeckels ist nicht auszuschließen, dass bei ungünstigen Bedingungen das als Gewebe oder Gewirke ausgeführte Scharnier reißt.

Der Neuerung liegt daher die Aufgabe zugrunde, ein Scharnier für einen Airbagdeckel derart auszubilden, dass es bei kostengünstiger Herstellbarkeit ein Reißen bzw. Lösen des Scharniers für den Airbagdeckel sicher verhindert und zudem ein leichtes Öffnen des Airbagdeckels ermöglicht.

Diese der Neuerung zugrunde liegende Aufgabe wird durch die Lehre des kennzeichnenden Teils des Hauptanspruches gelöst.

Mit anderen Worten ausgedrückt, wird ein Scharnier für einen Airbagdeckel vorgeschlagen, das eine mehrstufige textile Grundstruktur aufweist, in der Stoppfäden als Kraftaufnahmefäden integriert sind, die eine höhere Reißfestigkeit als auch einen längeren Weg als die textile Grundstruktur aufweisen.

Mit dieser Ausbildung werden zwei Systeme integriert, d. h. ein System, das bei Übersteigen einer definierten Zugbelastung reißt, um hierdurch einen Großteil der auftretenden Zugbelastung aufzunehmen, und ein zweites System, das ein definiertes Öffnen des Airbagdeckels (Öffnungswinkel) bei sicherem Halt realisiert.

Vorteilhafte Ausgestaltungen sind in den Unteransprüchen erläutert.

In vorteilhafter Weise ist die Grundstruktur als Gewirke ausgebildet, um eine kostengünstige Ausbildung desselben zu erreichen wie auch eine optimale Handhabung.

In vorteilhafter Ausgestaltung sind die "Stoppfäden" (Kraftfäden) in Richtung der Zugbelastung des Scharniers ausgerichtet, wobei eine gleichmäßige Verteilung der Stoppfäden über die textile Grundstruktur vorteilhaft ist, um z. B. bei einem Ausstanzen der Scharniere aus einem größeren Materialstück stets eine adäquate Menge an Stoppfäden in der textilen Grundstruktur zu erhalten.

Eine mögliche Ausbildung ist die gleichmäßige Abfolge von jeweils zwei Stehfäden der textilen Grundstruktur und einem Stoppfaden (Kraftaufnahmefaden), wobei diese Abfolge jedoch entsprechend der jeweiligen Bedingungen angepasst werden kann.

In vorteilhafter Ausgestaltung ist die textile Grundstruktur gegenüber den Stoppfäden (Kraftaufnahmefäden) so ausgebildet, dass zunächst ein Reißen der Grundstruktur erfolgt.

Die Stoppfäden weisen gegenüber den Fäden der textilen Grundstruktur eine größere Länge auf und sind beispielsweise in ihrem Längsverlauf mäandrierend, zickzackförmig, schlaufenförmig, bogenförmig, wellenförmig und/oder sich selbst überdeckend ausgebildet, so dass die Stoppfäden einen Bevorratungsbereich aufweisen, der im wesentlichen quer und/oder längs zur Zugrichtung ausgebildet ist.

Die vorgeschlagene mehrstufige Struktur, bestehend aus textiler Grundstruktur und Stoppfäden (Kraftaufnahmefäden) kann ihrerseits wiederum in ein textiles Flächengebilde eingebettet werden, so dass bei einer Zugbelastung des Deckelscharniers ein Aufreißen oder Öffnen der textilen Grundstruktur mitsamt Stoppfäden (Kraftaufnahmefäden) aus diesem textilen Flächengebilde erfolgt, um durch diesen Ausreiß- oder Öffnungsvorgang bereits auftretende Kräfte zumindest zu einem gewissen Grad abzubauen und gleichzeitig den Weg zum Öffnen (Öffnungswinkel) der Airbagklappe zu definieren.

Ausführungsbeispiele der Neuerung sind in den Zeichnungen dargestellt. Es zeigen
- Fig. 1a - Fig. 1 d: ein Ausführungsbeispiel der Neuerung in unterschiedlichen Stadien bei Zugbelastung auf das Scharnier,
- Fig. 1e - Fig. 1h: ein weiteres Ausführungsbeispiel in unterschiedlichen Stadien bei Zugbelastung auf das Scharnier,
- Fig. 2 und 3: weitere Ausführungen.

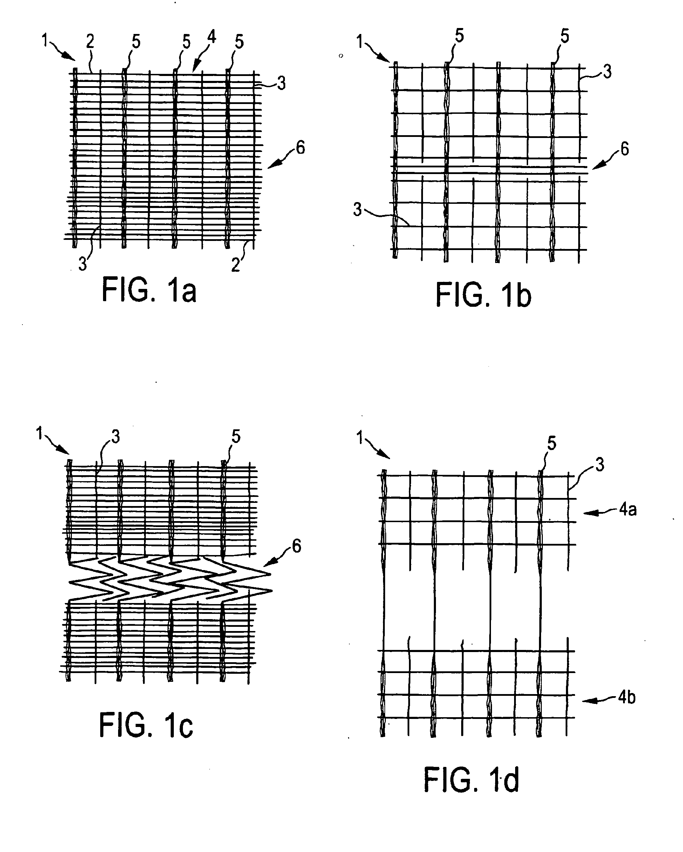

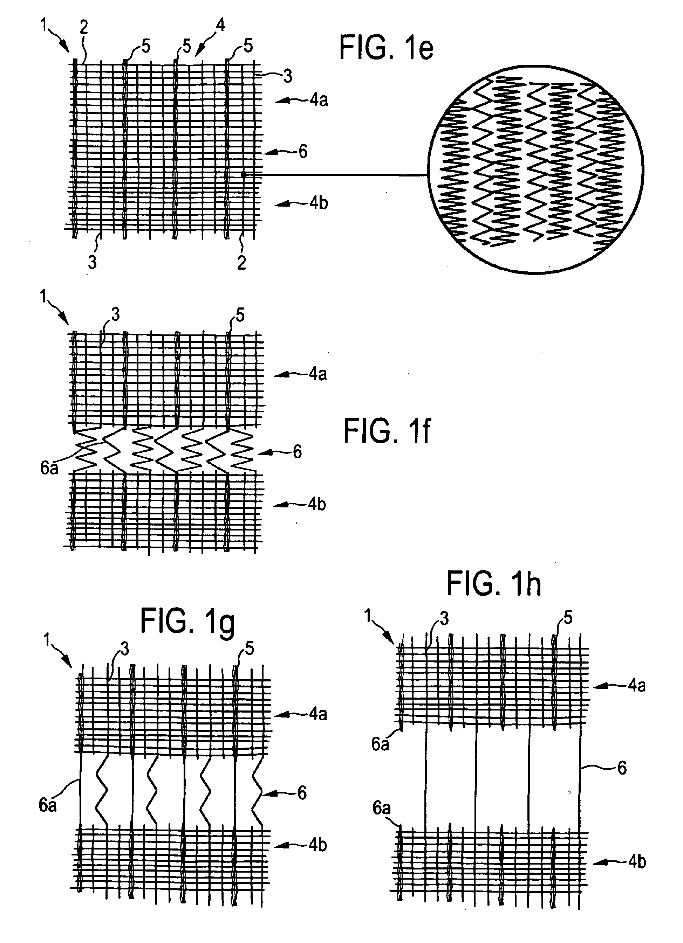

Bezug nehmend auf die Fig. 1a - Fig. 1d ist mit 1 ein Airbagdeckelscharnier dargestellt, das aus Fäden 2 und 3 einer textilen Grundstruktur 4 besteht, wobei diese textile Grundstruktur in diesem Ausführungsbeispiel als Gewirke ausgebildet ist.

In diese textile Grundstruktur sind sogenannte Stoppfäden 5 integriert, die hochfest (z. B. dtex 1100) ausgebildet sind, während die textile Grundstruktur (bestehend auch aus Polyester oder anderen geeigneten Materialien) nicht hochfest ausgebildet ist.

Die Stoppfäden 5 sind in Richtung einer Zugbelastung ausgerichtet, die beim Öffnen des Airbagdeckels auf das Scharnier desselben auftritt, und weisen mindestens einen Bevorratungsbereich 6 auf, in dem die Stoppfäden im wesentlichen quer zur Zugbelastung gelagert sind.

Bevorratungsbereiche (vollflächig Fig. 1a oderTeilbereiche Fig. 1b) durch integrierte Fadenlegung (Wegbevorratung) ermöglichen eine Kraftaufnahme über die Festigkeit der Fäden als auch ein definiertes Öffnen der Airbagklappe über den möglichen Weg.

Nach Zünden des Airbags öffnet sich der den Airbag abdeckende Airbagdeckel und die im Bereich des Airbagdeckelscharniers eingearbeitete textile Grundstruktur 4 wird beim Öffnen des Scharniers gedehnt bis zum Reißen. Der Vorgang der Belastung des Scharniers ist in Fig. 1c und 1d schematisch dargestellt. Die textile Grundstruktur dehnt sich also zunächst im Bereich des Bevorratungsbereiches 6, in dem die hochfesten Stoppfäden 5 diese Dehnung der textilen Grundstruktur bis zum Reißen zulassen (Kraftaufnahme).

Im Ausführungsbeispiel der Fig. 1c wird beispielhaft der Bevorratungsbereich der Stoppfäden 5 durch das Mäandrieren bzw. Zick Zack Legen dargestellt.

Fig. 1d zeigt beispielhaft den Weg der Stoppfäden, welche beim Öffnen des Airbagdeckels freigegeben werden kann bei gleichzeitiger Kraftaufnahme durch die Stoppfäden.

Je nach Anzahl der Stoppfäden bzw. je nach Ausführung der Reißfestigkeit dieser Stoppfäden 5 wird die Gesamtfestigkeit des Airbagdeckelscharniers 1 bestimmt.

In einer textilen Ausführungsform können jeweils zwei (Steh-) Fäden 3 der textilen Grundstruktur 4 vorhanden sein und sich an einen Stoppfaden 5 anschließen, so dass über die Breite des Airbagdeckelscharniers 1 eine Abfolge von zwei Fäden 3 textiler Grundstruktur 4 und einem Stoppfaden 5 gegeben ist. Es ist jedoch so zu verstehen, dass entsprechend der jeweiligen Gegebenheiten die konkreten Ausbildungen je nach gewünschter Reißfestigkeit angepasst werden können.

Bezug nehmend auf Fig. 1c ist bei einem weiteren Öffnen (mehrstufig) des Airbagdeckels die Situation des Airbagdeckelscharniers 1 dargestellt, in der die Fäden 3 der textilen Grundstruktur 4 durch eine Zugbeanspruchung (Dehnung) gerissen sind und sich die im Bevorratungsbereich 6 quer und/oder längs verlaufenden Stoppfäden 5 entsprechend der Zugbelastung ausrichten.

Bei einer weiteren Zugbelastung aufgrund einer breiteren Öffnung des Airbagdeckels ergibt sich die Situation entsprechend Fig. 1d, wo die kraftaufnehmenden Stoppfäden 5 die beiden nunmehr gerissenen Teilbereiche 4a und 4b der textilen Grundstruktur halten. Durch die hochfeste Ausbildung der Stoppfäden 5 wird ein Reißen des gesamten Airbagdeckelscharniers 1 sicher verhindert. Die Fadenbevorratung gibt den erforderlichen Weg zum Öffnen des Airbagdeckels frei und unterbindet gleichzeitig das nicht erwünschte Abreißen des Airbagdeckels.

Der maximale Ausdehnungsbereich des Airbagdecketscharniers 1, d. h. der Abstand der Teilbereiche 4a und 4b der Grundstruktur 4 wird durch die Länge der querverlaufenden Stoppfäden 5 im Bevorratungsbereich 6 definiert. Die Anzahl und die Reißfestigkeit der Stoppfäden 5 muss so ausgelegt sein, dass diese nach einem Reißen der gedehnten textilen Grundstruktur 4 die restlichen Kräfte aufnehmen (Mehrstufigkeit).

Fig. 1f und g zeigen, dass die Stoppfäden zueinander unterschiedliche Längen und/oder zueinander unterschiedliche Reißfestigkeiten aufweisen können, um eine zwei- oder mehrstufige Kraftaufnahme beim Öffnen zu realisieren.

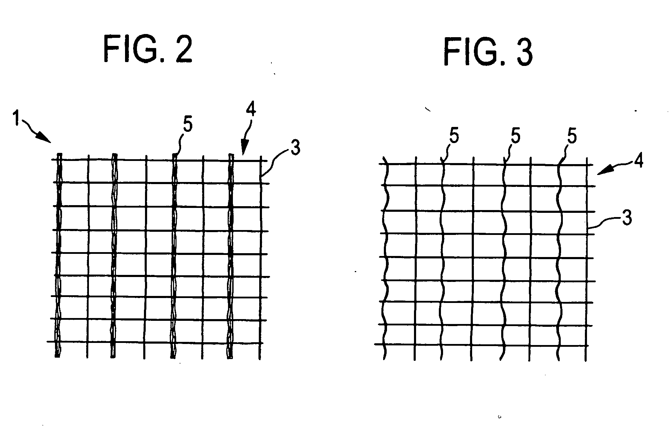

In einer weiteren Ausführungsform gemäß Fig. 2 sind die Stoppfäden 5 im wesentlichen entsprechend der Zugbelastung des Airbagdeckelscharniers 1 ausgebildet, wobei die Stoppfäden 5 eine gewisse Elastizität aufweisen und ein Dehnen und eine hierdurch bedingte Kraftaufnahme durch die textile Grundstruktur 4 ermöglichen.

Nach einem Reißen der Fäden 3 der textilen Grundstruktur 4 wird ein Zusammenhalten der gerissenen Bereiche 4a und 4b der textilen Grundstruktur gesichert bzw. ein völliges Auseinanderreißen des Airbagdeckelscharniers 1 verhindert.

In den weiteren Ausführungsformen gemäß Fig. 2 und Fig. 3 sind die Stoppfäden 5 mäandrierend bzw. zickzackförmig in die textile Grundstruktur 4 eingelagert und daher ergibt sich ein über die gesamte Länge der Stoppfäden 5 ausgebildeter "Bevorratungsbereich", so dass die Stoppfäden eine Dehnung und ein anschließendes Reißen der Fäden 3 der textilen Grundstruktur 4 ermöglichen und anschließend ein völliges Auseinanderreißen der Bereiche 4a und 4b der textilen Grundstruktur 4 verhindern.

In Fig. 4 sind die mäandrierenden bzw. zickzackförmigen Stoppfäden/Kraftaufnahmefäden im Bevorratungsbereich so eingelagert, dass die Bevorratungswege und Festigkeiten die Kraftaufnahme in der Rotationsachse der Airbagklappe definieren und den Öffnungswinkel der Airbagklappe ermöglichen und anschließend ein völliges Auseinanderreißen der Bereiche 4a und 4b der textilen Grundstruktur verhindern.

## Patentansprüche

1. Airbagdeckelscharnier mit einem textilen Scharnier, das sowohl mit dem Airbagdeckel als auch mit einem den Airbagdeckel umgebenden Trägerteil verbindbar ist, **dadurch gekennzeichnet, dass** das Airbagdeckelscharnier (1) eine textile Grundstruktur (4) aufweist, in der Stoppfäden (5) integriert sind, die eine höhere Reißfestigkeit als die textile Grundstruktur (4) und die gegenüber der textilen Grundstruktur (4) eine größere Länge aufweisen.

2. Airbagdeckelscharnier gemäß Anspruch 1, **gekennzeichnet durch** ein Gewirke als textile Grundstruktur (4).

3. Airbagdeckelscharnier gemäß Anspruch 1 oder 2, **gekennzeichnet durch** in Richtung der Zugbelastung des Airbagdeckelscharniers (1) ausgerichtete Stoppfäden (5).

4. Airbagdeckelscharnier gemäß einem der vorhergehenden Ansprüche, **gekennzeichnet durch** gleichmäßig über die textile Grundstruktur (4) verteilte Stoppfäden (5).

5. Airbagdeckelscharnier gemäß einem der vorhergehenden Ansprüche, **gekennzeichnet durch** die gleichmäßige Abfolge von jeweils zwei Stehfäden (3) der textilen Grundstruktur mit einem Stoppfaden (5).

6. Airbagdeckelscharnier gemäß einem der vorhergehenden Ansprüche, **gekennzeichnet durch** eine Beweglichkeit der textilen Grundstruktur (4) gegenüber den Stoppfäden (5).

7. Airbagdeckelscharnier nach einem der vorhergehenden Ansprüche, **gekennzeichnet durch** Stoppfäden (5), die im wesentlichen in Richtung der Zugbelastung des Scharniers (1) längs ausgerichtet sind, jedoch in Bevorratungsbereichen (6) zur Zugbelastung im wesentlichen quer und/oder längs ausgerichtet sind.

8. Airbagdeckelscharnier nach einem der vorhergehenden Ansprüche, **gekennzeichnet durch** Stoppfäden (5), die in ihrem Längsverlauf mäandrierend, zickzackförmig, schlaufenförmig, bogenförmig, wellenförmig und/oder sich selbst überdeckend ausgebildet sind, um den Weg zu realisieren.

9. Airbagdeckelscharnier gemäß einem der vorhergehenden Ansprüche, **gekennzeichnet durch** die Einbettung der textilen Grundstruktur (4) in ein textiles Flächengebilde, wie beispielsweise ein Gewirke.

10. Airbagdeckelscharnier nach einem der vorherigen Ansprüche, **dadurch gekennzeichnet, dass** die Stoppfäden zueinander unterschiedliche Längen und/oder zueinander unterschiedliche Reißfestigkeiten aufweisen.

## Claims

1. Airbag-cover hinge having a textile hinge which can be connected both to the airbag cover and to a supporting part surrounding the airbag cover, **characterised in that** the airbag-cover hinge (1) has a textile main structure (4) in which are incorporated arresting filaments (5) which are of a higher tensile strength than the textile main structure (4) and which are of a greater length than the textile main structure (4).

2. Airbag-cover hinge according to claim 1, **characterised by** a knitted fabric forming the textile main structure (4).

3. Airbag-cover hinge according to claim 1 or 2, **characterised by** arresting filaments (5) which are aligned in the direction in which the airbag-cover hinge (1) is loaded in tension.

4. Airbag-cover hinge according to one of the foregoing claims, **characterised by** arresting filaments (5) which are uniformly distributed through the textile main structure (4).

5. Airbag-cover hinge according to one of the foregoing claims, **characterised by** the uniform sequence of one arresting filament (5) to each pair of stationary filaments (3) of the textile main structure.

6. Airbag-cover hinge according to one of the foregoing claims, **characterised by** an ability of the textile main structure (4) to move relative to the arresting filaments (5).

7. Airbag-cover hinge according to one of the foregoing claims, **characterised by** arresting filaments (5) which are aligned longitudinally substantially in the direction in which the hinge (1) is loaded in tension but which are aligned substantially transversely and/or longitudinally relative to the tensile loading in supply-holding regions (6).

8. Airbag-cover hinge according to one of the foregoing claims, **characterised by** arresting filaments (5) whose longitudinal path is formed to be meandering, zig-zag, looped, arcuate, wavy and/or self-overlapping to enable the travel to be achieved.

9. Airbag-cover hinge according to one of the foregoing claims, **characterised by** the embedding of the textile main structure (4) in a textile fabric such for example as a knitted fabric.

10. Airbag-cover hinge according to one of the foregoing claims, **characterised in that** the arresting filaments are of different lengths from one another and/or of different tensile strengths from one another.

## Revendications

1. Charnière de couvercle d'airbag comprenant une charnière textile, qui peut être assemblée aussi bien avec le couvercle d'airbag qu'avec une partie support entourant le couvercle d'airbag, **caractérisée en ce que** la charnière de couvercle d'airbag (1) présente une structure de base textile (4) dans laquelle sont intégrés des fils d'arrêt (5), qui présentent une résistance à la déchirure plus élevée que celle de la structure de base textile (4) et une longueur plus grande par rapport à la structure de base textile (4).

2. Charnière de couvercle d'airbag suivant la revendication 1, **caractérisée par** un tissu à mailles en tant que structure de base textile (4).

3. Charnière de couvercle d'airbag suivant l'une des revendications 1 et 2, **caractérisée par** des fils d'arrêt (5) orientés en direction de la contrainte de traction de la charnière de couvercle d'airbag (1).

4. Charnière de couvercle d'airbag suivant l'une des revendications précédentes, **caractérisée par** des fils d'arrêt (5) répartis régulièrement sur la structure de base textile (4).

5. Charnière de couvercle d'airbag suivant l'une des revendications précédentes, **caractérisée par** la succession régulière de respectivement deux fils droits (3) de la structure de base textile avec un fil d'arrêt (5).

6. Charnière de couvercle d'airbag suivant l'une des revendications précédentes, **caractérisée par** une mobilité de la structure de base textile (4) par rapport aux fils d'arrêt (5).

7. Charnière de couvercle d'airbag suivant l'une des revendications précédentes, **caractérisée par** des fils d'arrêt (5), qui sont orientés essentiellement dans la direction longitudinale en direction de la contrainte de traction de la charnière (1), mais sont orientés essentiellement dans la direction transversale et/ou longitudinale par rapport à la contrainte de traction dans des zones réserve (6).

8. Charnière de couvercle d'airbag suivant l'une des revendications précédentes, **caractérisée par** des fils d'arrêt (5), qui sont réalisés dans leur allure longitudinale en méandre, en zigzag, en boucle, en arc, en forme d'onde et/ou en chevauchement mutuel, pour réaliser la course.

9. Charnière de couvercle d'airbag suivant l'une des revendications précédentes, **caractérisée par** l'incorporation de la structure de base textile (4) dans une structure plane textile, telle que par exemple un tissu à mailles.

10. Charnière de couvercle d'airbag suivant l'une des revendications précédentes, **caractérisée en ce que** les fils d'arrêt présentent des longueurs mutuellement différentes et/ou des résistances à la déchirure mutuellement différentes.
